# EUROPEAN PATENT SPECIFICATION

(11) **EP 4 488 897 B1**
(45) Date of publication and mention of the grant of the patent: **06.08.2025**
(21) Application number: 24182135.4
(22) Date of filing: 14.06.2024
(51) Int. Cl.: G06Q 10/04, G06Q 10/06, G06Q 10/30, G06Q 50/04, G06Q 50/06

(54) **ENVIRONMENTAL LOAD INFORMATION COOPERATION SYSTEM AND METHOD**
SYSTEM UND VERFAHREN ZUR ZUSAMMENARBEIT BEI UMWELTLASTINFORMATIONEN
SYSTÈME ET PROCÉDÉ DE COOPÉRATION D'INFORMATIONS SUR LA CHARGE ENVIRONNEMENTALE

(30) Priority: 06.07.2023 JP 2023111154
(43) Date of publication of application: 08.01.2025
(73) Proprietor: Hitachi, Ltd., Tokyo 100-8280 (JP)
(72) Inventor: NAKAO, Sanae, Tokyo, 100-8280 (JP); OYAMATSU, Masayuki, Tokyo, 100-8280 (JP); SATO, Hideki, Tokyo, 100-8280 (JP); MORI, Takuro, Tokyo, 100-8280 (JP); YAGI, Masakazu, Tokyo, 100-8280 (JP)
(74) Representative: MERH-IP Matias Erny Reichl Hoffmann Patentanwälte PartG mbB

(56) References cited:
- EP-A1- 2 521 086
- EP-A1- 4 425 404
- WO-A1-2023/074591
- US-A1- 2004 054 516
- US-A1- 2007 198 289

## Description

### BACKGROUND OF THE INVENTION

### 1. Field of the Invention

The present disclosure relates to a technique for managing an environmental load caused when remanufacturing a product.

### 2. Description of Related Art

In recent years, consumers' awareness of the environment has been changing due to worsening environmental problems, concerns about resource depletion, and promotion of the Industrial Revolution 4.0. Against this background, there is a growing need for an environmentally friendly circular economy system, rather than the traditional linear economy. Companies are accelerating an effort of acquiring, as primary data, data on an environmental load such as an emission amount of greenhouse gas (GHG) or resource consumption associated with a company activity. As Scope 3 of the GHG protocol, the companies are required to reduce not only an emission amount of an own company but also an environmental load of the entire supply chain.

In the GHG protocol, discussions are also progressing regarding an amount of contribution to reduction as Scope 4. The amount of contribution to reduction is an index indicating how much contribution has been made to reducing the environmental load. There is a high possibility that the amount of contribution to reduction due to a circular economy activity, such as reuse in which a part is recycled and reused, and remanufacturing in which a used product is collected and reused, is related to the Scope 4. In this case, it is also required to calculate an environmental load in the circular economy activity.

However, it is not easy to calculate the environmental load in the circular economy activity because a process leading to the reuse differs depending on a recyclable part or a recyclable material used to remanufacture a product. Even if the process is the same, the environmental load differs depending on an entity and a place for carrying out the process, which further complicates calculation of the environmental load.

PTL 1 discloses a method for evaluating an environmental load related to reuse when evaluating the environmental load related to resource circulation. In the method disclosed in PTL 1, recycling process data is input and stored, a recycling process coefficient is stored, and a recycling load of an object to be reused is calculated using the recycling process data and the recycling process coefficient. Accordingly, it is possible to select a factory with the smallest recycling load by calculating an environmental load related to part reuse without actually measuring recycling process data and calculating a recycling load in a plurality of recycling factories, and to select a factory that recycles each reusable part so that the total recycling load is the smallest by calculating a recycling load of a plurality of reusable parts at each recycling factory.

PTL 2 discloses an information generation method which includes a manufacturing step, an input step, a generation step, and a registration step.

PTL 3 discloses a design support apparatus which includes an evaluation unit that evaluates a recyclability of the product, an analysis unit that analyzes a factor obstructing the recyclability based on an evaluation result of the evaluating unit, and a display unit that displays a remedy against an obstruction factor.

### Citation List

### Patent Literature

PTL 1: JP2009-160504A
PTL 2: WO 2023/074591A1
PTL 3: US 2004/054516A1

### SUMMARY OF THE INVENTION

However, in the method disclosed in PTL 1, a recycling load caused in a process at each factory is determined in advance, and an optimal combination of factories is selected based on this prerequisite so that the recycling load is minimized. Therefore, in the method disclosed in PTL 1, it is not intended to review the process itself. Therefore, in a supply chain in which a final product is completed through a plurality of processes carried out by a plurality of different business operators, since a total load reduction amount is simply a sum of results of reduction in environmental loads individually performed by the business operators, there is a possibility that the result will not necessarily be sufficient for the total load reduction amount.

One object of the present disclosure is to provide a technique for supporting an effective reduction in an environmental load caused when remanufacturing a product.

The above cited problems are solved in accordance with the appended set of claims. In particular, there is provided an environmental load information cooperation system for supporting management on an environmental load caused when remanufacturing a recycled product using a recyclable part through one or more processes, and the environmental load information cooperation system includes: a memory; and a processor. The memory stores processing information that is accumulated by associating information indicating recycling processing performed in each of the processes for recycling the recyclable part, information indicating a processing purpose corresponding to the recycling processing, and information indicating an environmental load caused by the recycling processing, acquired when remanufacturing the recycled product, with a recycling identifier for individually identifying remanufacturing of the recycled product and a part type of the recyclable part. The processor receives designation of a target part type that is a part type to be analyzed, extracts, from the processing information, a permutation of one or more types of recycling processing performed consecutively on the recyclable part corresponding to the target part type in remanufacturing the recycled product, as a processing pattern for each processing purpose, gives a priority to the processing pattern based on a representative value of the environmental load for each processing purpose, and presents analysis result information based on the priority for the processing pattern.

According to the aspect of the present disclosure, since a preferable processing pattern is presented from a viewpoint of the environmental load caused when remanufacturing the recycled product using the recyclable part, it is possible to support an effective reduction in the environmental load.

### BRIEF DESCRIPTION OF THE DRAWINGS

FIG. 1 is a conceptual diagram illustrating a state of cooperation for environmental load information among companies.
FIG. 2 is a block diagram of an environmental load information inter-company cooperation system.
FIG. 3 is a diagram illustrating an example of processing information.
FIG. 4 is a diagram illustrating an example of maintenance history information.
FIG. 5 is a diagram illustrating an example of processing code information.
FIG. 6 is a diagram illustrating an example of purpose code information.
FIG. 7 is a diagram illustrating an example of part attribute information.
FIG. 8 is a diagram illustrating a hardware configuration of an information processing device that implements the environmental load information inter-company cooperation system.
FIG. 9 is a flowchart of overall processing.
FIG. 10 is a flowchart of improvement possibility determination processing.
FIG. 11 is a diagram illustrating an example of a result display screen.
FIG. 12 is a conceptual diagram illustrating authority to register and browse the processing information.

### DESCRIPTION OF EMBODIMENTS

Hereinafter, an embodiment of the invention will be described with reference to the drawings.

In the present embodiment, there is disclosed a system that supports an effective reduction in an environmental load of an entire supply chain by inter-company cooperation for managing information on the environmental load caused when remanufacturing a recycled product from a used product, using a part that is recycled through a process carried by a plurality of companies. The environmental load here refers to an emission amount of greenhouse gas (GHG) or resource efficiency associated with a company activity, and a carbon dioxide (CO₂) emission amount is exemplified as the environmental load in the present embodiment.

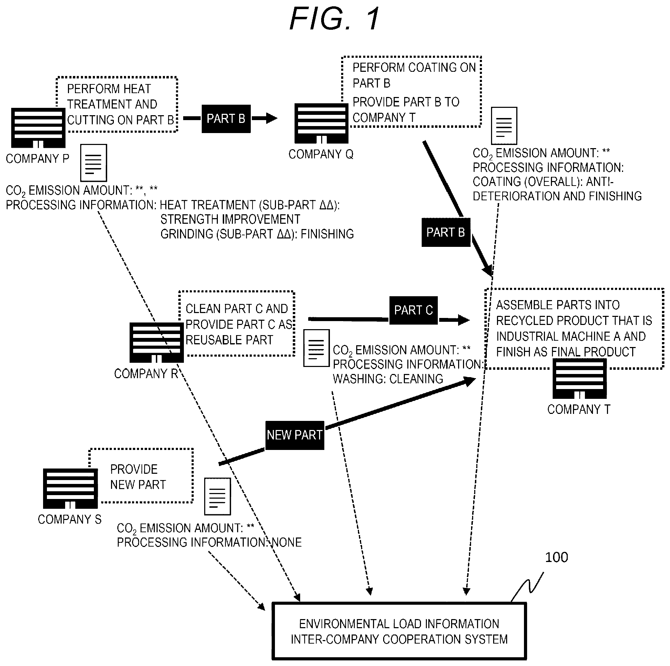

FIG. 1 is a conceptual diagram illustrating a state of cooperation for environmental load information among companies.

Referring to FIG. 1, there is illustrated a supply chain in which a recyclable part B recycled through processes carried out by a company P and a company Q, a recyclable part C recycled through a process carried out by a company R, and a new part provided from a company S are provided to a company T, and a recycled product is manufactured at the company T using the recyclable parts B and C and the new part. The company P performs heat treatment and cutting on the recyclable part B, and provides the processed recyclable part B to the company Q. The company Q performs coating on the provided recyclable part B, and provides the processed recyclable part B to the company T. The company R cleans the recyclable part C and supplies the processed recyclable part C as a reusable part to the company T. Hereinafter, processing performed in the process of each company is also referred to as "recycling processing". The company T assembles the provided recyclable parts B and C and new part to finish the recycled product as a final product.

An environmental load information inter-company cooperation system 100 is a system that supports an effective reduction in an environmental load of an entire supply chain by inter-company cooperation for managing information on the environmental load caused in the entire supply chain. For example, the environmental load information inter-company cooperation system 100 is a system that manages an environmental load caused in a manufacturing process carried out by a plurality of companies for all products including a new product and a recycled product, and may provide a function for supporting an effective reduction in the environmental load described below for remanufacturing a recycled product. From each of the companies P, Q, R, and S, performance information (hereinafter, also referred to as "processing information") on an environmental load caused when performing recycling processing in each of the processes is transmitted to the environmental load information inter-company cooperation system 100. For example, a company belonging to the supply chain accesses the environmental load information inter-company cooperation system 100, and uploads the processing information on a process carried out by the own company. The processing information includes information indicating a content of recycling processing such as heat treatment, cutting, grinding, washing, and coating, and a CO₂ emission amount, as well as information indicating a processing purpose of the recycling processing. For example, a processing purpose of the heat treatment in the company P is strength improvement, and a processing purpose of the grinding is finishing. A processing purpose of the coating in the company Q is anti-deterioration and finishing. A processing purpose of the washing in the company R is cleaning.

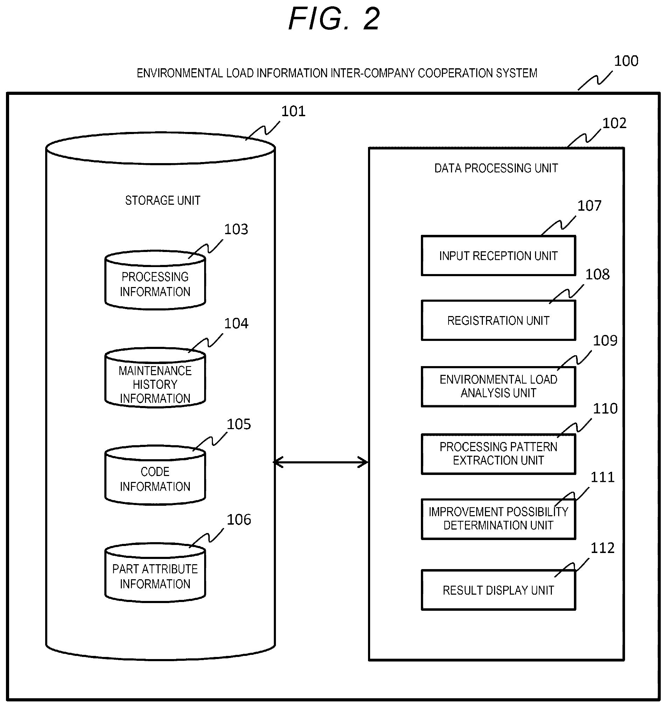

FIG. 2 is a block diagram of the environmental load information inter-company cooperation system.

Referring to FIG. 2, the environmental load information inter-company cooperation system 100 includes a storage unit 101 and a data processing unit 102.

The storage unit 101 stores various types of information used for processing in the environmental load information inter-company cooperation system 100. The data processing unit 102 executes processing for implementing functions of the environmental load information inter-company cooperation system 100 using the various types of information stored in the storage unit 101.

The storage unit 101 stores processing information 103, maintenance history information 104, code information 105, and part attribute information 106.

The processing information 103 is performance information on an environmental load caused when performing recycling processing on a part in each process.

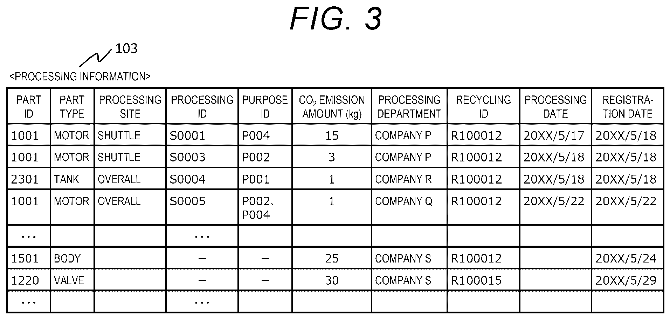

FIG. 3 is a diagram illustrating an example of the processing information.

Referring to FIG. 3, a part ID, a part type, a processing site, a processing ID, a purpose ID, a CO₂ emission amount, a processing department, a recycling ID, a processing date, and a registration date related to each recycling processing are registered in the processing information 103. The part ID is an identifier for identifying a part subjected to the recycling processing. The part type is information indicating a type of the part subjected to the recycling processing. The processing site is information indicating a site to be subjected to the recycling processing in the part. The processing ID is an identifier for identifying the recycling processing. The purpose ID is an identifier for identifying a processing purpose of the recycling processing. The CO₂ emission amount is an amount of CO₂ generated by performing the recycling processing. The processing department is information indicating an entity that performs the recycling processing. The recycling ID is an identifier for identifying remanufacturing of a recycled product. A common identifier is given to the recycling processing on a part related to the remanufacturing of a specific recycled product. The processing date is information on a date when the recycling processing is performed. The registration date is information on a date when the processing information is registered.

For example, a record in a first line in FIG. 3 indicates that, on the processing date "20XX/5/17", the processing department "company P" performs recycling processing with the processing ID "S0001" and the purpose ID "P004" on the processing site "shuttle" in a part having the part ID "1001" and the part type "motor", and at that time, the CO₂ emission amount of "15 kg" is generated, and the processing information is registered on the registration date "20XX/5/18".

The maintenance history information 104 is performance information on maintenance of a part incorporated into a product.

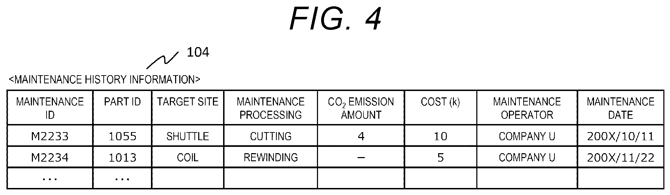

FIG. 4 is a diagram illustrating an example of the maintenance history information.

Referring to FIG. 4, a maintenance ID, a part ID, a target site, maintenance processing, a CO₂ emission amount, a cost, a maintenance operator, and a maintenance date related to each maintenance are registered in the maintenance history information 104. The maintenance ID is an identifier for identifying each maintenance. The part ID is an identifier for identifying a part subjected to the maintenance. The target site is information indicating a site where the maintenance is performed in the part. The maintenance processing is information indicating processing performed during the maintenance. The CO₂ emission amount is an amount of CO₂ generated by performing the maintenance. The cost is information indicating a cost required for performing the maintenance. The maintenance operator is information indicating an entity that performs the maintenance. The maintenance date is information on a date when the maintenance is performed.

For example, a record in a first line in FIG. 4 indicates that, on the maintenance date "200X/10/11", the maintenance operator "company U" performs maintenance processing "cutting" with the maintenance ID "M2233" on the target site "shuttle" in a part having the part ID "1055", and at that time, the CO₂ emission amount of "4 kg" is generated, and the cost "10,000 yen" is required.

The code information 105 is information that defines an identifier used for processing. The code information 105 includes processing code information 105A and purpose code information 105B. The processing code information 105A is information that defines a processing ID. The purpose code information 105B is information that defines a purpose ID.

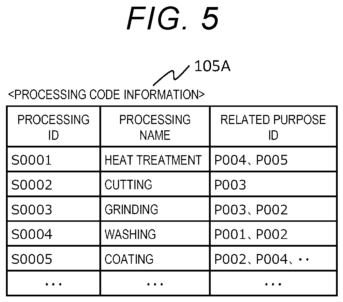

FIG. 5 is a diagram illustrating an example of the processing code information.

Referring to FIG. 5, the processing code information 105A defines a processing ID, a processing name, and a related purpose ID related to each recycling processing. The processing ID is an identifier for identifying the recycling processing. The processing name is information indicating a name of the recycling processing. The related purpose ID is an identifier for identifying a processing purpose to which the recycling processing may correspond.

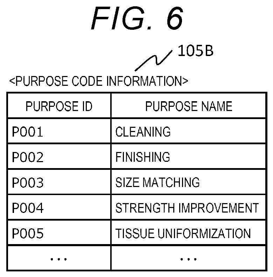

The processing purpose is a purpose for which the recycling processing is performed. Even in the same recycling processing, the processing purpose may be different. For example, a record in a first line in FIG. 5 indicates that recycling processing called a processing name "heat treatment" has the processing ID "S0001" and may correspond to a processing purpose of the related purpose ID "P004" and a processing purpose of the related purpose ID "P005". As will be described later with reference to FIG. 6, the processing purpose of the related purpose ID "P004" is "strength improvement", and the processing purpose of the related purpose ID "P005" is "tissue uniformization". That is, the recycling processing referred to as the heat treatment may be performed for a purpose of improving a strength, and may be performed for a purpose of uniformizing a tissue.

FIG. 6 is a diagram illustrating an example of the purpose code information.

Referring to FIG. 6, a purpose ID and a purpose name related to each processing purpose are defined in the purpose code information 105B. The purpose ID is an identifier for identifying a processing purpose. The purpose name is information indicating a name of the processing purpose.

For example, a record in a first line in FIG. 6 indicates that the purpose ID of a processing purpose called a purpose name "cleaning" is "P001".

The part attribute information 106 is information indicating an attribute of a part.

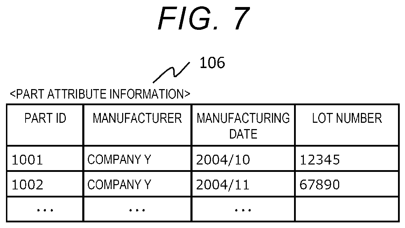

FIG. 7 is a diagram illustrating an example of the part attribute information.

Referring to FIG. 7, a manufacturer, a manufacturing date, and a lot number related to each part are registered in the part attribute information 106. The manufacturer is information indicating an entity that manufactures the part. The manufacturing date is information on a date when the part is manufactured. The lot number is a number representing a lot to which the part belongs.

For example, a record in a first line in FIG. 7 indicates that a part having the part ID "1001" is manufactured by the manufacturer "company Y" on the manufacturing date "2004/10", and the part belongs to a lot with the lot number "12345".

Returning to FIG. 2, the data processing unit 102 includes an input reception unit 107, a registration unit 108, an environmental load analysis unit 109, a processing pattern extraction unit 110, an improvement possibility determination unit 111, and a result display unit 112.

The input reception unit 107 receives an operation input by a user related to various types of processing.

The registration unit 108 registers, in the storage unit 101, various data input in advance including the code information 105 and the part attribute information 106. The registration unit 108 receives processing information from each company that performs recycling processing and registers the processing information as the processing information 103, and receives maintenance history information from each company that performs maintenance and registers the maintenance history information as the maintenance history information 104. The registration unit 108 allows each company to browse the processing information 103 of the own company.

The environmental load analysis unit 109 evaluates an environmental load caused by a supply chain based on the processing information 103 obtained from past recycling processing, and presents a pattern of a process expected to reduce the environmental load. The processing pattern extraction unit 110 executes processing pattern extraction processing included in overall processing by the environmental load analysis unit 109. The processing pattern extraction processing is processing of extracting, as a processing pattern, one or more consecutive processes related to each other from a proven route for which processing information is acquired in the past in the supply chain. The improvement possibility determination unit 111 executes improvement possibility determination processing included in the overall processing by the environmental load analysis unit 109. The improvement possibility determination processing is processing of giving a priority to the processing pattern from a viewpoint of the environmental load caused by the recycling processing. The environmental load analysis unit 109, the processing pattern extraction unit 110, and the improvement possibility determination unit 111 cooperatively perform the overall processing. Details of the overall processing and the processing included therein will be described later.

The result display unit 112 presents the user with analysis result information based on a result of a series of processing by the environmental load analysis unit 109, the processing pattern extraction unit 110, and the improvement possibility determination unit 111.

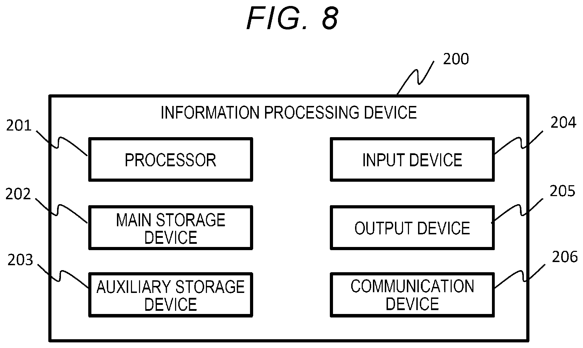

FIG. 8 is a diagram illustrating a hardware configuration of an information processing device that implements the environmental load information inter-company cooperation system. In the present embodiment, the environmental load information inter-company cooperation system 100 is implemented by an information processing device 200 that is a computer such as a server. However, the configuration according to the present embodiment is an example, and the environmental load information inter-company cooperation system 100 may be implemented on a virtual machine or on a cloud.

Referring to FIG. 8, the information processing device 200 includes one or more processors (CPUs) 201, a main storage device 202, an auxiliary storage device 203, an input device 204, an output device 205, and a communication device 206.

The processor 201 reads various software programs and data stored in the main storage device 202 or the auxiliary storage device 203, and executes the software programs using the data, thereby implementing functions of the units. The data processing unit 102 illustrated in FIG. 2, and the input reception unit 107, the registration unit 108, the environmental load analysis unit 109, the processing pattern extraction unit 110, the improvement possibility determination unit 111, and the result display unit 112 in the data processing unit 102 are implemented by the processor 201 executing programs using data stored in a memory (the main storage device 202 or the auxiliary storage device 203).

The auxiliary storage device 203 may be a hard disk drive (HDD) and/or a solid state drive (SSD), and is not limited thereto. The auxiliary storage device 203 stores the software program used by the environmental load information inter-company cooperation system 100 and an execution record. However, the software program and the execution record may not be stored in the information processing device 200 but in an external storage device connected to the information processing device 200 via a network.

The input device 204 is, for example, a keyboard, a mouse, or a barcode reader, and acquires information input by an operation of the user. The input information is processed by the software program.

The output device 205 is, for example, a display, and displays a graphical user interface (GUI) of the software program and a processing result.

The communication device 206 communicably connects the environmental load information inter-company cooperation system 100 and an external device via a network such as the Internet.

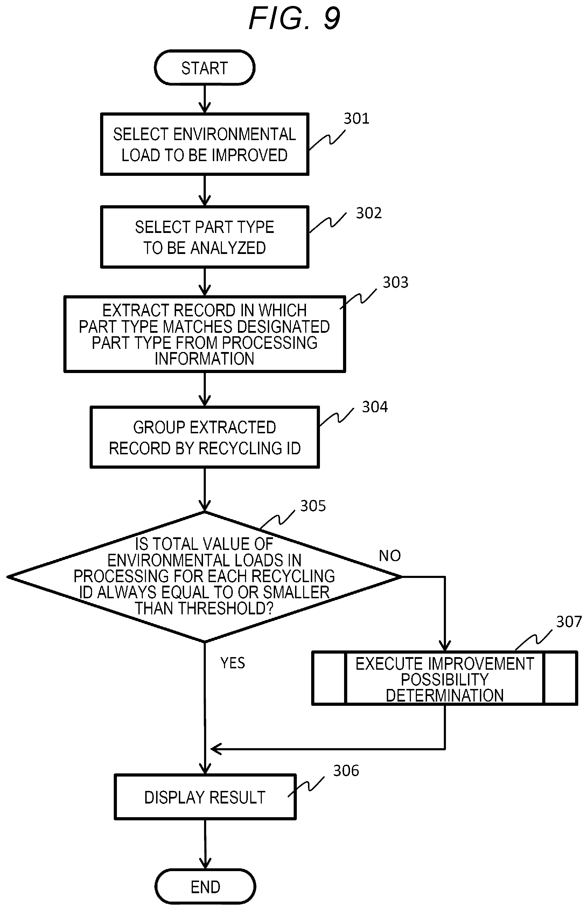

FIG. 9 is a flowchart of the overall processing.

Referring to FIG. 9, first, in step 301, the input reception unit 107 receives an input from the user to select an environmental load to be improved. For example, a CO₂ emission amount may be selected. Further, in step 302, the input reception unit 107 receives selection of a part type to be analyzed from the user. For example, a motor may be selected. The part type selected here is hereinafter also referred to as a designated part type.

Subsequently, the environmental load analysis unit 109 extracts a record corresponding to the designated target part from the processing information 103 in step 303, and groups the extracted record by a recycling ID in step 304. For example, a record of the part type of a motor may be extracted from the processing information 103. Further, in step 305, the environmental load analysis unit 109 calculates a total value of environmental loads caused in recycling processing of records grouped into each recycling ID, and determines whether a total value for all the recycling IDs is equal to or smaller than a predetermined threshold. This threshold is hereinafter also referred to as an environmental load total threshold.

If the total value of environmental loads for all the recycling IDs is equal to or smaller than the environmental load total threshold, it means that an environmental load caused in remanufacturing of all recycled products recorded in the processing information 103 is equal to or smaller than a target value. Therefore, the environmental load analysis unit 109 ends environmental load analysis processing, and the result display unit 112 presents the user with analysis result information to that effect by screen display in step 306.

On the other hand, when the total value of the environmental loads for any one of the recycling IDs exceeds the environmental load total threshold, the processing pattern extraction unit 110 and the improvement possibility determination unit 111 cooperate to execute improvement possibility determination processing in step 307, and the result display unit 112 presents the user with analysis result information based on a processing result of the improvement possibility determination processing by screen display in step 306. Hereinafter, the improvement possibility determination processing will be described.

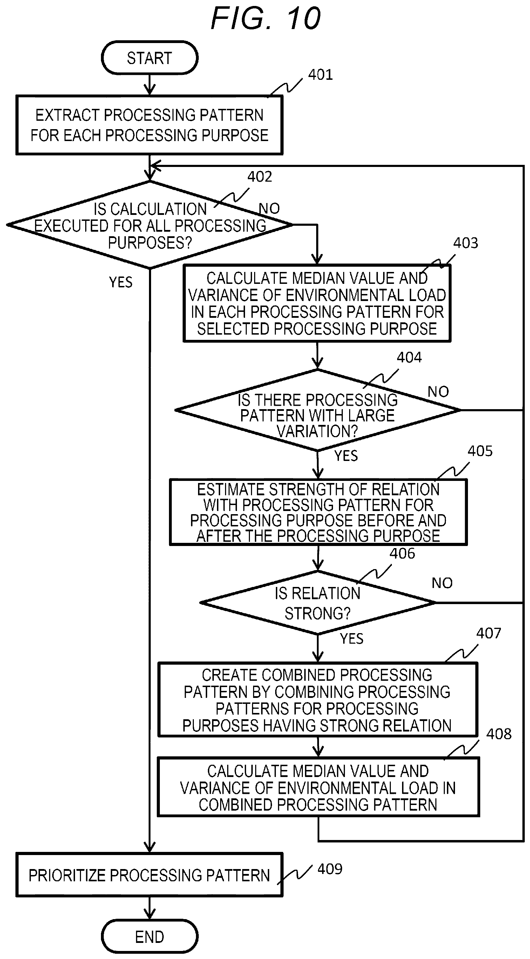

FIG. 10 is a flowchart of the improvement possibility determination processing.

First, in step 401, the processing pattern extraction unit 110 specifies, from the processing information 103, a permutation of one or more types of recycling processing performed consecutively on the recyclable part corresponding to the target part type in remanufacturing the recycled product, as a processing pattern for each processing purpose, and extracts a location corresponding to each processing pattern from the processing information 103. It can be seen that, when records having the same part ID and the same recycling ID are arranged in an ascending order of the processing date, consecutive records sharing the purpose ID of a selected processing purpose form a permutation of recycling processing constituting a processing pattern. For example, in the processing information 103 in FIG. 3, when records having the part ID "1001" and the recycling ID "R100012" are arranged in the ascending order of the processing date, there are two consecutive records sharing the record of the purpose ID "P002 (finishing)" and respectively having the processing IDs "S0003 (grinding)" and "S0005 (coating)". The two records form a permutation of recycling processing constituting a processing pattern.

Subsequently, the improvement possibility determination unit 111 determines whether calculation processing is executed for all processing purposes in step 402, and executes the calculation processing in steps 403 to 408 for each processing purpose.

In step 403, the improvement possibility determination unit 111 calculates a median value and a variance of an environmental load in each processing pattern for the selected processing purpose. Portions corresponding to the processing patterns may be collected from records having the purpose ID of the selected processing purpose in the processing information 103 and grouped for each processing pattern, and a median value and a variance of an environmental load for each group may be calculated. Here, the median value is an example of a representative value, and other representative values such as an average value and a mode value may be used. Subsequently, in step 404, the improvement possibility determination unit 111 determines whether there is a processing pattern in which the variance of the environmental load is larger than a predetermined threshold. This threshold is hereinafter also referred to as a variance threshold.

When there is no processing pattern in which the variance of the environmental load is larger than the variance threshold, the improvement possibility determination unit 111 ends calculation processing for a currently selected processing purpose and shifts to calculation processing for a next processing purpose. On the other hand, when there is a processing pattern in which the variance of the environmental load is larger than the variance threshold, the processing pattern may not be suitable for evaluating the environmental load, and thus the following processing is to be executed.

In step 405, the improvement possibility determination unit 111 estimates a strength of relation between the processing pattern and a processing pattern for a processing purpose adjacent before and after a processing purpose of the processing pattern. The processing pattern adjacent before and after the processing pattern is hereinafter also referred to as an adjacent processing pattern. When the relation between the processing pattern and the adjacent processing pattern is strong to a certain level or higher, it can be estimated that the processing pattern and the adjacent processing pattern are suitable for being collectively handled as a series of recycling processing. In the present embodiment, if a variance of an environmental load when the processing pattern and the adjacent processing pattern are combined is equal to or smaller than the variance threshold, it is determined that the relation between the processing pattern and the adjacent processing pattern is strong to the certain level or higher. However, as this method, a method may be used in which the strength of the relation between the processing patterns is represented by another index.

When the adjacent processing pattern whose relation with the processing pattern is strong to the certain level or higher is not found (NO in step 406), the improvement possibility determination unit 111 ends calculation processing for a currently selected processing purpose and shifts to calculation processing for a next processing purpose.

On the other hand, when the adjacent processing pattern whose relation with the processing pattern is strong to the certain level or higher is found (YES in step 406), the improvement possibility determination unit 111 creates a new processing pattern by combining the processing pattern and the adjacent processing pattern in step 407. In step 408, the improvement possibility determination unit 111 calculates a median value and a variance of an environmental load in the newly created processing pattern. As the two processing patterns are combined, processing purposes of the processing patterns are also handled as a combination.

When determining that calculation processing is executed for all processing patterns in the determination in step 402, the improvement possibility determination unit 111 gives a priority to the processing pattern from a viewpoint of reducing the environmental load for each processing purpose in step 409. The improvement possibility determination unit 111 gives the priority to the processing pattern such that the lower the caused environmental load, the higher the priority. For example, the improvement possibility determination unit 111 gives a higher priority as the median value of the environmental load is smaller. Prioritization information here is the analysis result information. In step 306 in FIG. 9, the result display unit 112 presents the user with the analysis result information by screen display.

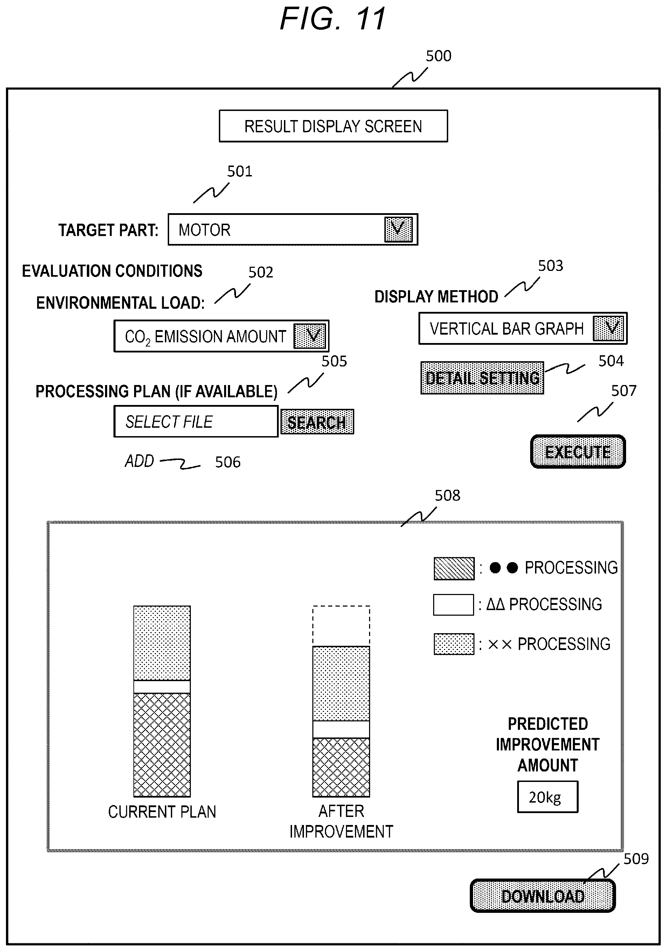

FIG. 11 is a diagram illustrating an example of a result display screen.

FIG. 11 illustrates a result display screen 500 that visualizes how much an environmental load is improved by adopting a processing pattern having the highest priority based on a plan for remanufacturing a recycled product that is considered for implementation. The plan for remanufacturing the recycled product that is considered for implementation is hereinafter also referred to as a processing plan.

The result display screen 500 includes a target part selection object 501, an environmental load selection object 502, a display method selection object 503, a detail setting button 504, a processing plan selection object 505, an add button 506, an execute button 507, a comparison result display area 508, and a download button 509.

The target part selection object 501 is a user interface for receiving selection of a designated part type from the user. In the example in FIG. 11, a "motor" is selected as the designated part type. The environmental load selection object 502 is a user interface for receiving selection of an environmental load to be improved from the user. In the example in FIG. 11, a "CO₂ emission amount" is selected as the environmental load to be improved. The display method selection object 503 is a user interface for receiving selection of a display method of an analysis result from the user. In the example in FIG. 11, a "vertical bar graph" is selected. The detail setting button 504 is a button for displaying a screen for setting details for the display method. By pressing the button, the screen for setting details for the display method may pop up. On the detail setting screen, for example, a display format of the vertical bar graph may be set in more detail. The processing plan selection object 505 is a user interface for receiving selection of a processing plan file from the user. FIG. 11 illustrates the example in which a file can be searched. The add button 506 is a button for adding a processing plan file. The execute button 507 is a button for receiving a start of analysis on the environmental load from the user. When pressing the execute button 507 in a state in which the designated part type, the environmental load to be improved, and the display method of the analysis result are selected and the processing plan file is added, the environmental load is to be analyzed under the conditions. The comparison result display area 508 is an area where the analysis result is displayed. In the example in FIG. 11, a CO₂ emission amount in a current processing plan and a CO₂ emission amount after improvement are displayed in the vertical bar graph for comparison. A prediction that the CO₂ emission amount will be improved by 20 kg is displayed. The download button 509 is a button for starting downloading analysis result data.

The registration unit 108 allows each company to browse the processing information 103 of the own company as described above, and companies as entities that perform the recycling processing included in the same processing pattern can mutually browse the processing information 103 on other recycling processing included in the processing pattern.

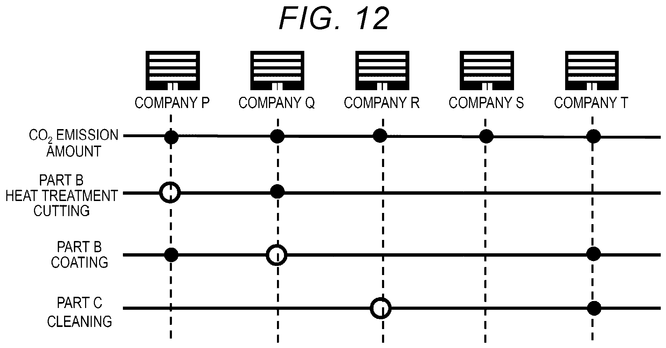

FIG. 12 is a conceptual diagram illustrating authority to register and browse the processing information.

Referring to FIG. 12, the companies are arranged horizontally, and portions of information in the processing information are arranged vertically. A graphic symbol indicating the authority of each company is illustrated at an intersection of the company and a portion of the processing information. A white circle indicates that the processing information in the portion is registered by the company. The company can browse the processing information in the portion since the information is registered by the company. A black circle indicates that the processing information in the portion is not registered by the company but can be browsed by the company.

In the example in FIG. 12, information on the CO₂ emission amount can be browsed by all companies P, Q, R, S, and T. On the other hand, information on the heat treatment and cutting on the part B is registered by the company P. Not only the company P but also the company Q can browse the information on the heat treatment and cutting on the part B. Information on the coating on the part B is registered by the company Q. Not only the company Q but also the company P can browse the information on the coating on the part B.

When calculating a median value and a variance of an environmental load in each processing pattern, the improvement possibility determination unit 111 may refer to the part attribute information 106 and correct a value of the environmental load caused by recycling processing based on the part attribute information 106. For example, it can be assumed that when a processing amount of the recycling processing differs depending on the number of years elapsed since a manufacturing date, the caused environmental load will also vary accordingly. Size information such as a weight and a dimension of a part may further register in the part attribute information 106, and the value of the environmental load may be corrected and used according to the size information. It can be assumed that the larger the size, the larger the area of a target site to be processed in the recycling processing, and the larger the caused environmental load.

In the present embodiment described above, the environmental load is analyzed for all processing purposes as illustrated in FIG. 10, but as another example, among selected combinations of a designated part type and a processing purpose, those with a large total value of environmental loads may be preferentially targeted for analysis. For example, among the combinations of the designated part type and the processing purpose, a predetermined number with larger total values of environmental loads may be targeted for analysis.

In the present embodiment described above, the priority is given to the processing pattern from the viewpoint of reducing the environmental load, but as another example, a priority may be given in consideration of a cost. In this case, information indicating the cost required for performing the recycling processing on the recyclable part may be further registered in the processing information 103, and the improvement possibility determination unit 111 may give a priority to the processing pattern using an index value based on the median value of the environmental load and a median value of the cost required for the recycling processing for each combination of the designated part type and the processing purpose. For example, the environmental load may be multiplied by a predetermined coefficient and converted into a cost, a total value of a cost of money required for the recycling processing and the cost obtained by converting the environmental load may be used as the index value, and the priority may be given such that the processing pattern with a smaller index value has a higher priority.

In the present embodiment described above, the environmental load caused by the recycling processing in each process is analyzed, but as another example, an environmental load caused by transporting the recyclable part between geographical locations where each process is carried out may be further targeted for analysis. In this case, the environmental load registered in the processing information 103 may include an environmental load caused by transporting the recyclable part between locations where the processes are carried out, and the improvement possibility determination unit 111 may give a priority to the processing pattern based on the processing information 103 including the environmental load caused by transportation. Further, the priority for the processing pattern may be determined based on an index value in consideration of a cost required for each process and the environmental load generated in the process, and a cost required for the transportation and the environmental load caused by transporting the recyclable part between the locations where the recycling processing in each process is carried out.

In the present embodiment described above, the environmental load is analyzed without considering a history of the used product subjected to remanufacturing, but this may be taken into consideration. The part may be maintained before the product is used. The environmental load information inter-company cooperation system 100 acquires information on an environmental load caused by maintenance and a cost required for the maintenance from a company that performs the maintenance, and accumulates the information as the maintenance history information 104. In the example in FIG. 4, the maintenance history information 104 is acquired from the maintenance company U.

When calculating a median value and a variance of an environmental load in each processing pattern, if the same processing as recycling processing in a recycling process is performed during maintenance, the improvement possibility determination unit 111 may add a value of an environmental load caused by the maintenance to the environmental load in the recycling processing. For example, if cutting is performed on a shuttle of a motor during maintenance, a value of an environmental load caused by the cutting performed during the maintenance may be added to an environmental load caused in a process of performing the cutting as recycling processing on the shuttle when the motor is a recyclable part. Alternatively, the environmental load caused in the process of performing the cutting as the recycling processing on the shuttle when the motor is the recyclable part may be corrected based on the value of the environmental load caused by the cutting performed during the maintenance.

Although the present embodiment has been described above, the invention is not limited only thereto, and these embodiments may be used in combination or some configurations may be changed within the scope of the technical idea of the invention.

## Claims

1. An environmental load information cooperation system for supporting management on an environmental load caused when remanufacturing a recycled product using a recyclable part through one or more processes, the environmental load information cooperation system comprising:
a memory (101); and
a processor (102), wherein
the memory (101)
stores processing information (103) that is accumulated by associating information indicating recycling processing performed in each of the processes for recycling the recyclable part, information indicating a processing purpose corresponding to the recycling processing, and information indicating an environmental load caused by the recycling processing, acquired when remanufacturing the recycled product, with a recycling identifier for individually identifying remanufacturing of the recycled product and a part type of the recyclable part, and
the processor (102)
receives designation of a target part type that is a part type to be analyzed,
**characterized in that** the processor (102)
extracts, from the processing information (103), a permutation of one or more types of recycling processing performed consecutively on the recyclable part corresponding to the target part type in remanufacturing the recycled product, as a processing pattern for each processing purpose,
gives a priority to the processing pattern from a viewpoint of reducing the environmental load for each processing purpose based on a representative value of the environmental load for each processing purpose, and
presents analysis result information how much an environmental load is improved by adopting the processing pattern based on the priority for the processing pattern.

2. The environmental load information cooperation system according to claim 1, wherein
when there is a processing pattern in which a variance of the environmental load caused when performing the recycling processing in the permutation is larger than a predetermined variance threshold among the extracted processing patterns, regarding the processing pattern, if a relation between the processing pattern and an adjacent processing pattern that is a processing pattern adjacent before or after the processing pattern is strong to a certain level or higher, the processor (102) creates a new processing pattern by combining the processing pattern and the adjacent processing pattern.

3. The environmental load information cooperation system according to claim 2, wherein
regarding the processing pattern in which the variance of the environmental load caused when performing the recycling processing in the permutation is larger than the variance threshold, if a variance of an environmental load when the processing pattern and the adjacent processing pattern are combined is equal to or smaller than the variance threshold, the processor (102) combines the processing pattern and the adjacent processing pattern assuming that the relation is strong to the certain level or higher.

4. The environmental load information cooperation system according to at least one of the previous claims, wherein
information indicating entities that perform the recycling processing in the processes is further registered in the processing information, and
the processor (102)
allows each of the entities to browse a portion of the processing information (103)related to the recycling processing performed by the own entity, and
when the processing pattern is extracted or created, allows each entity that performs the recycling processing included in the processing pattern to browse a portion of the processing information (103) related to the recycling processing performed by other entities included in the processing pattern.

5. The environmental load information cooperation system according to at least one of the previous claims, wherein
the processor (102)
gives a higher priority to the processing pattern as the representative value of the environmental load is smaller, and
presents, as analysis result information, processing patterns whose priorities are within a predetermined upper order.

6. The environmental load information cooperation system according to at least one of the previous claims, wherein
information indicating a cost required for performing the recycling processing on the recyclable part is further registered in the processing information, and
the processor (102) gives the priority to the processing pattern using an index value based on the representative value of the environmental load and a representative value of the cost required for the recycling processing.

7. The environmental load information cooperation system according to at least one of the previous claims, wherein
the environmental load registered in the processing information (103) includes an environmental load caused by transporting the recyclable part between geographical locations where the processes are carried out.

8. The environmental load information cooperation system according to at least one of the previous claims, wherein
the processor (102)
calculates, for each recycling identifier, a total value of environmental loads caused by the recycling processing performed on the recyclable part of the target part type, and
starts analysis on the environmental load for each processing pattern when the total value for any recycling identifier exceeds a predetermined environmental load total threshold.

9. The environmental load information cooperation system according to at least one of the previous claims, wherein
the representative value is a median value.

10. An environmental load information cooperation method for causing a computer including a memory (101) and a processor (102) to support management on an environmental load caused when remanufacturing a recycled product using a recyclable part through one or more processes, the environmental load information cooperation method comprising:
storing, by the memory (101), processing information(103) that is accumulated by associating information indicating recycling processing performed in each of the processes for recycling the recyclable part, information indicating a processing purpose corresponding to the recycling processing, and information indicating an environmental load caused by the recycling processing, acquired when remanufacturing the recycled product, with a recycling identifier for individually identifying remanufacturing of the recycled product and a part type of the recyclable part; and
by the processor (102),
receiving designation of a target part type that is a part type to be analyzed,
**characterized by**
extracting, from the processing information, a permutation of one or more types of recycling processing performed consecutively on the recyclable part corresponding to the target part type in remanufacturing the recycled product, as a processing pattern for each processing purpose,
giving a priority to the processing pattern from a viewpoint of reducing the environmental load for each processing purpose based on a representative value of the environmental load for each processing purpose, and
presenting analysis result information how much an environmental load is improved by adopting the processing pattern based on the priority for the processing pattern.

## Patentansprüche

1. Umgebungslastinformations-Kooperationssystem zur Unterstützung der Verwaltung einer Umgebungslast, die bei der Wiederherstellung eines recycelten Produkts unter Verwendung eines recycelbaren Teils durch einen oder mehrere Prozesse verursacht wird, wobei das Umgebungslastinformations-Kooperationssystem umfasst:
einen Speicher (101); und
einen Prozessor (102), wobei
der Speicher (101)
Verarbeitungsinformationen (103) speichert, die durch Verknüpfen von Informationen, die eine Recyclingverarbeitung angeben, die in jedem der Prozesse zum Recyceln des recycelbaren Teils durchgeführt wird, von Informationen, die einen Verarbeitungszweck angeben, der der Recyclingverarbeitung entspricht, und von Informationen, die eine Umgebungslast angeben, die durch die Recyclingverarbeitung verursacht wird, die bei der Wiederherstellung des recycelten Produkts erfasst wird, mit einer Recyclingkennung zum individuellen Identifizieren der Wiederherstellung des recycelten Produkts und eines Teiletyps des recycelbaren Teils akkumuliert werden, und
der Prozessor (102)
eine Bezeichnung eines Zielteiletyps empfängt, der ein zu analysierender Teiletyp ist,
**dadurch gekennzeichnet, dass** der Prozessor (102)
aus den Verarbeitungsinformationen (103) eine Permutation eines oder mehrerer Typen von Recyclingverarbeitung, die nacheinander an dem recycelbaren Teil entsprechend dem Zielteiletyp bei der Wiederherstellung des recycelten Produkts durchgeführt wird, als ein Verarbeitungsmuster für jeden Verarbeitungszweck extrahiert,
dem Verarbeitungsmuster aus einer Sicht des Reduzierens der Umgebungslast für jeden Verarbeitungszweck basierend auf einem repräsentativen Wert der Umgebungslast für jeden Verarbeitungszweck eine Priorität gibt, und
Analyseergebnisinformationen darüber präsentiert, wie stark eine Umgebungslast verbessert wird, indem das Verarbeitungsmuster basierend auf der Priorität für das Verarbeitungsmuster übernommen wird.

2. Umgebungslastinformations-Kooperationssystem nach Anspruch 1, wobei
wenn es ein Verarbeitungsmuster gibt, in dem eine Varianz der Umgebungslast, die verursacht wird, wenn die Recyclingverarbeitung in der Permutation durchgeführt wird, größer als ein vorbestimmter Varianzschwellenwert unter den extrahierten Verarbeitungsmustern ist, in Bezug auf das Verarbeitungsmuster, wenn eine Beziehung zwischen dem Verarbeitungsmuster und einem benachbarten Verarbeitungsmuster, das ein Verarbeitungsmuster ist, das vor oder nach dem Verarbeitungsmuster benachbart ist, auf ein bestimmtes Niveau oder höher stark ist, der Prozessor (102) ein neues Verarbeitungsmuster durch Kombinieren des Verarbeitungsmusters und des benachbarten Verarbeitungsmusters erzeugt.

3. Umgebungslastinformations-Kooperationssystem nach Anspruch 2, wobei
in Bezug auf das Verarbeitungsmuster, in dem die Varianz der Umgebungslast, die verursacht wird, wenn die Recyclingverarbeitung in der Permutation durchgeführt wird, größer als der Varianzschwellenwert ist, wenn eine Varianz einer Umgebungslast, wenn das Verarbeitungsmuster und das benachbarte Verarbeitungsmuster kombiniert werden, gleich oder kleiner als der Varianzschwellenwert ist, der Prozessor (102) das Verarbeitungsmuster und das benachbarte Verarbeitungsmuster unter der Annahme kombiniert, dass die Beziehung auf das bestimmte Niveau oder höher stark ist.

4. Umgebungslastinformations-Kooperationssystem nach mindestens einem der vorhergehenden Ansprüche, wobei
Informationen, die Entitäten angeben, die die Recyclingverarbeitung in den Prozessen durchführen, ferner in den Verarbeitungsinformationen registriert sind, und
der Prozessor (102)
jeder der Entitäten ermöglicht, einen Teil der Verarbeitungsinformationen (103) zu durchsuchen, die sich auf die Recyclingverarbeitung beziehen, die von der eigenen Entität durchgeführt wird, und
wenn das Verarbeitungsmuster extrahiert oder erzeugt wird, jeder Entität, die die Recyclingverarbeitung durchführt, die in dem Verarbeitungsmuster enthalten ist, ermöglicht, einen Teil der Verarbeitungsinformationen (103) zu durchsuchen, die sich auf die Recyclingverarbeitung beziehen, die von anderen Entitäten durchgeführt wird, die in dem Verarbeitungsmuster enthalten sind.

5. Umgebungslastinformations-Kooperationssystem nach mindestens einem der vorhergehenden Ansprüche, wobei
der Prozessor (102)
dem Verarbeitungsmuster eine höhere Priorität gibt, wenn der repräsentative Wert der Umgebungslast kleiner ist, und
als Analyseergebnisinformationen Verarbeitungsmuster präsentiert, deren Prioritäten innerhalb einer vorbestimmten oberen Ordnung liegen.

6. Umgebungslastinformations-Kooperationssystem nach mindestens einem der vorhergehenden Ansprüche, wobei
Informationen, die Kosten angeben, die zum Durchführen der Recyclingverarbeitung an dem recyclingfähigen Teil erforderlich sind, ferner in den Verarbeitungsinformationen registriert sind, und
der Prozessor (102) dem Verarbeitungsmuster die Priorität unter Verwendung eines Indexwerts basierend auf dem repräsentativen Wert der Umgebungslast und einem repräsentativen Wert der für die Recyclingverarbeitung erforderlichen Kosten gibt.

7. Umgebungslastinformations-Kooperationssystem nach mindestens einem der vorhergehenden Ansprüche, wobei
die Umgebungslast, die in den Verarbeitungsinformationen (103) registriert ist, eine Umgebungslast enthält, die durch Transportieren des recyclingfähigen Teils zwischen geografischen Orten, an denen die Prozesse ausgeführt werden, verursacht wird.

8. Umgebungslastinformations-Kooperationssystem nach mindestens einem der vorhergehenden Ansprüche, wobei
der Prozessor (102)
für jede Recyclingkennung einen Gesamtwert von Umgebungslasten berechnet, die durch die Recyclingverarbeitung verursacht werden, die an dem recyclingfähigen Teil des Zielteiletyps durchgeführt wird, und
eine Analyse der Umgebungslast für jedes Verarbeitungsmuster startet, wenn der Gesamtwert für eine beliebige Recyclingkennung einen vorbestimmten Gesamtschwellenwert der Umgebungslast überschreitet.

9. Umgebungslastinformations-Kooperationssystem nach mindestens einem der vorhergehenden Ansprüche, wobei
der repräsentative Wert ein Medianwert ist.

10. Umgebungslastinformations-Kooperationsverfahren, um einen Computer, der einen Speicher (101) und einen Prozessor (102) enthält, zu veranlassen, die Verwaltung einer Umgebungslast zu unterstützen, die bei der Wiederherstellung eines recycelten Produkts unter Verwendung eines recycelbaren Teils durch einen oder mehrere Prozesse verursacht wird, wobei das Umgebungslastinformations-Kooperationsverfahren umfasst:
Speichern, durch den Speicher (101), von Verarbeitungsinformationen (103), die durch Verknüpfen von Informationen, die eine Recyclingverarbeitung angeben, die in jedem der Prozesse zum Recyceln des recycelbaren Teils durchgeführt wird, von Informationen, die einen Verarbeitungszweck angeben, der der Recyclingverarbeitung entspricht, und von Informationen, die eine Umgebungslast angeben, die durch die Recyclingverarbeitung verursacht wird, die bei der Wiederherstellung des recycelten Produkts erfasst wird, mit einer Recyclingkennung zum individuellen Identifizieren der Wiederherstellung des recycelten Produkts und eines Teiletyps des recycelbaren Teils akkumuliert werden; und
durch den Prozessor (102),
Empfangen einer Bezeichnung eines Zielteiletyps, der ein zu analysierender Teiletyp ist,
**gekennzeichnet durch**
Extrahieren, aus den Verarbeitungsinformationen, einer Permutation eines oder mehrerer Typen von Recyclingverarbeitung, die nacheinander an dem recycelbaren Teil entsprechend dem Zielteiletyp bei der Wiederherstellung des recycelten Produkts durchgeführt wird, als ein Verarbeitungsmuster für jeden Verarbeitungszweck,
dem Verarbeitungsmuster aus einer Sicht des Reduzierens der Umgebungslast für jeden Verarbeitungszweck basierend auf einem repräsentativen Wert der Umgebungslast für jeden Verarbeitungszweck eine Priorität gibt, und
Präsentieren von Analyseergebnisinformationen darüber, wie stark eine Umgebungslast verbessert wird, indem das Verarbeitungsmuster basierend auf der Priorität für das Verarbeitungsmuster übernommen wird.

## Revendications

1. Système de coopération d'informations de charge environnementale pour prendre en charge la gestion d'une charge environnementale provoquée lors de la refabrication d'un produit recyclé en utilisant une partie recyclable par l'intermédiaire d'un ou de plusieurs processus, le système de coopération d'informations de charge environnementale comprenant :
une mémoire (101) ; et
un processeur (102), dans lequel
la mémoire (101)
stocke des informations de traitement (103) qui sont accumulées en associant des informations indiquant un traitement de recyclage effectué dans chacun des processus pour recycler la partie recyclable, des informations indiquant un but de traitement correspondant au traitement de recyclage, et des informations indiquant une charge environnementale provoquée par le traitement de recyclage, acquises lors de la refabrication du produit recyclé, avec un identifiant de recyclage pour identifier individuellement la refabrication du produit recyclé et un type de partie de la partie recyclable, et
le processeur (102)
reçoit la désignation d'un type de partie cible qui est un type de partie à analyser,
**caractérisé en ce que** le processeur (102)
extrait, à partir des informations de traitement (103), une permutation d'un ou de plusieurs types de traitement de recyclage effectués consécutivement sur la partie recyclable correspondant au type de partie cible lors de la refabrication du produit recyclé, en tant que modèle de traitement pour chaque but de traitement,
donne une priorité au modèle de traitement d'un point de vue de réduction de la charge environnementale pour chaque but de traitement sur la base d'une valeur représentative de la charge environnementale pour chaque but de traitement, et
présente des informations de résultat d'analyse indiquant combien une charge environnementale est améliorée en adoptant le modèle de traitement sur la base de la priorité pour le modèle de traitement.

2. Système de coopération d'informations de charge environnementale selon la revendication 1, dans lequel
lorsqu'il existe un modèle de traitement dans lequel une variance de la charge environnementale provoquée lors de l'exécution du traitement de recyclage dans la permutation est supérieure à un seuil de variance prédéterminé parmi les modèles de traitement extraits, concernant le modèle de traitement, si une relation entre le modèle de traitement et un modèle de traitement adjacent qui est un modèle de traitement adjacent avant ou après le modèle de traitement est forte à un certain niveau ou supérieure, le processeur (102) crée un nouveau modèle de traitement en combinant le modèle de traitement et le modèle de traitement adjacent.

3. Système de coopération d'informations de charge environnementale selon la revendication 2, dans lequel
concernant le modèle de traitement dans lequel la variance de la charge environnementale provoquée lors de l'exécution du traitement de recyclage dans la permutation est supérieure au seuil de variance, si une variance d'une charge environnementale lorsque le modèle de traitement et le modèle de traitement adjacent sont combinés est égale ou inférieure au seuil de variance, le processeur (102) combine le modèle de traitement et le modèle de traitement adjacent en supposant que la relation est forte au certain niveau ou supérieure.

4. Système de coopération d'informations de charge environnementale selon au moins l'une des revendications précédentes, dans lequel
des informations indiquant des entités qui effectuent le traitement de recyclage dans les processus sont en outre enregistrées dans les informations de traitement, et
le processeur (102)
permet à chacune des entités de parcourir une partie des informations de traitement (103) liées au traitement de recyclage effectué par la propre entité, et
lorsque le modèle de traitement est extrait ou créé, permet à chaque entité qui effectue le traitement de recyclage inclus dans le modèle de traitement de parcourir une partie des informations de traitement (103) liées au traitement de recyclage effectué par d'autres entités incluses dans le modèle de traitement.

5. Système de coopération d'informations de charge environnementale selon au moins l'une des revendications précédentes, dans lequel
le processeur (102)
donne une priorité supérieure au modèle de traitement lorsque la valeur représentative de la charge environnementale est inférieure, et
présente, en tant qu'informations de résultat d'analyse, des modèles de traitement dont les priorités sont dans un ordre supérieur prédéterminé.

6. Système de coopération d'informations de charge environnementale selon au moins l'une des revendications précédentes, dans lequel
des informations indiquant un coût requis pour effectuer le traitement de recyclage sur la partie recyclable sont en outre enregistrées dans les informations de traitement, et
le processeur (102) donne la priorité au modèle de traitement en utilisant une valeur d'indice basée sur la valeur représentative de la charge environnementale et une valeur représentative du coût requis pour le traitement de recyclage.

7. Système de coopération d'informations de charge environnementale selon au moins l'une des revendications précédentes, dans lequel
la charge environnementale enregistrée dans les informations de traitement (103) comprend une charge environnementale provoquée par le transport de la partie recyclable entre des emplacements géographiques où les processus sont effectués.

8. Système de coopération d'informations de charge environnementale selon au moins l'une des revendications précédentes, dans lequel
le processeur (102)
calcule, pour chaque identifiant de recyclage, une valeur totale de charges environnementales provoquées par le traitement de recyclage effectué sur la partie recyclable du type de partie cible, et
démarre une analyse sur la charge environnementale pour chaque modèle de traitement lorsque la valeur totale pour un quelconque identifiant de recyclage dépasse un seuil total de charge environnementale prédéterminé.

9. Système de coopération d'informations de charge environnementale selon au moins l'une des revendications précédentes, dans lequel
la valeur représentative est une valeur médiane.

10. Procédé de coopération d'informations de charge environnementale pour amener un ordinateur comprenant une mémoire (101) et un processeur (102) à prendre en charge la gestion d'une charge environnementale provoquée lors de la refabrication d'un produit recyclé en utilisant une partie recyclable par l'intermédiaire d'un ou de plusieurs processus, le procédé de coopération d'informations de charge environnementale comprenant :
le stockage, par la mémoire (101), d'informations de traitement (103) qui sont accumulées en associant des informations indiquant un traitement de recyclage effectué dans chacun des processus pour recycler la partie recyclable, des informations indiquant un but de traitement correspondant au traitement de recyclage, et des informations indiquant une charge environnementale provoquée par le traitement de recyclage, acquises lors de la refabrication du produit recyclé, avec un identifiant de recyclage pour identifier individuellement la refabrication du produit recyclé et un type de partie de la partie recyclable ; et
par le processeur (102),
la réception de la désignation d'un type de partie cible qui est un type de partie à analyser,
**caractérisé par**
l'extraction, à partir des informations de traitement, d'une permutation d'un ou de plusieurs types de traitement de recyclage effectués consécutivement sur la partie recyclable correspondant au type de partie cible lors de la refabrication du produit recyclé, en tant que modèle de traitement pour chaque but de traitement,
la donnée d'une priorité au modèle de traitement d'un point de vue de réduction de la charge environnementale pour chaque but de traitement sur la base d'une valeur représentative de la charge environnementale pour chaque but de traitement, et
la présentation d'informations de résultat d'analyse indiquant combien une charge environnementale est améliorée en adoptant le modèle de traitement sur la base de la priorité pour le modèle de traitement.
